Europäisches Patentamt

European Patent Office

Office européen des brevets

(11) Publication number: **0 326 632**
**A1**

# EUROPEAN PATENT APPLICATION

(21) Application number: **88101478.1**

(22) Date of filing: **02.02.88**

(51) Int. Cl.⁴: **C08J 5/22**

(43) Date of publication of application:
**09.08.89 Bulletin 89/32**

(84) Designated Contracting States:
**BE DE FR GB IT NL**

(71) Applicant: **THE DOW CHEMICAL COMPANY**
**2030 Dow Center Abbott Road P.O. Box 1967**
**Midland Michigan 48640-1967(US)**

(72) Inventor: **Martin, Charles R.**
**4345 Carter Creek No. 4**
**Bryan Texas 77802(US)**
Inventor: **Moore, Robert M.**
**III, Avenue D 103 C**
**College Station Texas 77843(US)**

(74) Representative: **Huber, Bernhard, Dipl.-Chem.**
**et al**
**Möhlstrasse 22 Postfach 860 820**
**D-8000 München 86(DE)**

(54) **Method for the preparation of perfluorosulfonate ionomer films.**

(57) The invention is a method for forming a perfluorosulfonate ionomer film comprising:

(a) forming a solution of a perfluorosulfonate ionomer in its salt form,

(b) coating a substrate with the perfluorosulfonate ionomer solution, and

(c) heating the coated substrate to a temperature of at least about 120° C to deposit a solvent-resistant film of a perfluorosulfonate ionomer onto the substrate.

EP 0 326 632 A1

## METHOD FOR THE PREPARATION OF PERFLUOROSULFONATE IONOMER FILMS

Perfluorosulfonate ionomers (PFSI's) such as E. I. duPont de Nemours & Co.'s Nafion polymer, are proving to be versatile membrane materials in a variety of applications. For example, PFSI's have been used in electrochemical processes and devices including chloralkali cells, batteries, fuel cells, and water electrolyzers. However, many applications require PFSI's to be formed into films. This is frequently accomplished through dissolving the PFSI in a solvent, depositing the solution onto a substrate, and removing the solvent. High-temperature, high-pressure procedures for dissolving PFSI membranes have recently been reported in U.S. Patent 4,433,082 and in an article by C. R. Martin, T. A. Rhoades, and J. A. Ferguson, Anal. Chem., 1982, 54, 1639. Using such procedures, solutions of PFSI have been formed and used to prepare PFSI-coated electrodes, catalysts and high performance liquid chromatography packing materials. However, such methods do not produce a film that is entirely satisfactory because its properties are different from the polymer before it was formed into a film.

Any film-forming method used with PFSI's preferably should produce PFSI films which possess the solubility behavior, chemical, mechanical and thermal stability equivalent to the PFSI material as it was originally produced. For example, films formed by prior art methods, such as those discussed above, are easily dissolved in an ethanol/water mixture, while the original polymer was not so easily dissolved. In addition, the PFSI's cluster-channel morphology is changed when the polymer is formed into a film. The cluster-channel morphology is important because it helps to impede anion transport, which is a desirable property if these films are to accomplish the task for which they are being used, i.e., to reject anions. The present invention provides a method which can be used to produce films having properties similar to those of the polymer before they were formed into the film.

References which teach dissolving a PFSI in a high boiling point solvent include: "Electrochemical, IR and XPS Study of Nafion Films Prepared From Hexamethylphosphortriamide Solution,"Journal of Electroanalytical Chemistry, Volume 199 (1986), pages 81-82; "Study of Nafion Films On Electrodes Prepared From Dimethylacetamide Solution,"Journal of Electroanalytical Chemistry, Volume 200 (1986), pages 379-381; and United States Patent No. 4,433,082, "Process For Making Liquid Composition of Perfluorinated Ion Exchange Polymer, and Product Thereof," W. G. Grot.

More particularly, the invention resides in a method for forming a perfluorosulfonate ionomer film comprising:

(a) forming a solution of a perfluorosulfonate ionomer in its salt form,

(b) coating a substrate with the perfluorosulfonate ionomer solution, and

(c) heating the coated substrate to a temperature of at least about 120°C to deposit a solvent-resistant film of a perfluorosulfonate ionomer onto the substrate.

The term "solvent-resistant film" means a film which, after being contacted with a 50:50 volume ratio of an ethanol:water solution at 50°C for one hour in an ultrasonic bath and dried is found to have lost less than 8 percent of its weight, and preferably less than 5 percent of its weight.

Perfluorosulfonate ionomers (PFSI) like those described in the following patents are suitable for use in the present invention: 3,282,875; 3,909,378; 4,025,405; 4,065,366; 4,116,888; 4,123,336; 4,126,588; 4,151,052; 4,176,215; 4,178,218; 4,192,725; 4,209,635; 4,212,713; 4,251,333; 4,270,996; 4,329,435; 4,330,654; 4,337,137; 4,337,211; 4,340,680; 4,357,218; 4,358,412; 4,358,545; 4,417,969; 4,462,877; 4,470,889; and 4,478,695; European Patent Application 0,027,009. Such PFSI's usually have equivalent weight in the range of from 500 to 2000.

Particularly preferred for use in the present invention are PFSI's containing repeating units formed from the polymerization of monomer I with monomer II (as defined below). Optionally, repeating units can be formed from the inclusion of a third type of monomer during the polymerization of monomer I and monomer II.

The first type of monomer is represented by the general formula:

$$CF_2 = CZZ' \quad (I)$$

where:

Z and Z' are independently selected from -H, -Cl, -F, or $-CF_3$.

The second type of monomer consists of one or more monomers selected from compounds represented by the general formula:

$$Y-(CF_2)_a-(CFR_f)_b-(CFR_f')_c-O-[CF(CF_2X)-CF_2-O]_n-CF=CF_2 \quad (II)$$

where:

Y is selected from $-SO_2OA$ where:

A is selected from $-H^+$, an alkali metal, or $-R_1R_2R_3R_4N^+$; and where $R_1$, $R_2$, $R_3$, and $R_4$ are independently selected from $-H^+$, a branched or linear alkyl radical having from 1 to 10 carbon atoms or an aryl radical;

a is 0-6;

b is 0-6;

c is 0 or 1;

provided a + b + c is not equal to 0;

X is selected from -Cl, -Br, -F, or mixtures thereof when n > 1;

n is 0 to 6; and $R_f$ and $R_f'$, are independently selected from -F, -Cl, perfluoroalkyl radicals having from 1 to 10 carbon atoms and fluorochloroalkyl radicals having from 1 to 10 carbon atoms.

Particularly preferred as a PFSI for use in the present invention is a polymer having repeating units formed from the monomers shown above where n = 0 or 1; $R_f$ and $R_f'$ is -F; X is -Cl or -F; and a + b + c is equal to 2 or 3.

Where A is $-H^+$, it is desirable to convert A to its salt form by reacting it with an appropriate base, e.g. sodium hydroxide or potassium hydroxide. Preferably, A is converted to an alkali metal, particularly $-ONa^-$ or $-OK^-$ by reacting the PFSI with a sodium hydroxide or potassium hydroxide aqueous solution, respectively. Such conversions are well known to those skilled in the art.

It has been discovered that the $H^+$-form PFSI's tend to char when heated to temperatures above 120° C, thus the hydrogen form of a PFSI degrades during the removal of the solvent.

The third repeating unit which may optionally be present in the polymer may be an unsaturated perfluoroalkyl monomer other than those represented by the general formula II, above. Particularly preferred is a repeating unit selected from compounds represented by the general formula:

$$Y'\text{-}(CF_2)_{a'}\text{-}(CFR_f)_{b'}'\text{-}(CFR_f')_{c'}'\text{-}O\text{-}[CF(CF_2X')\text{-}CF_2\text{-}O]\text{-}_{n'}\text{-}CF=CF_2 \text{ (III)}$$

where:

$Y'$ is selected from -F, -Cl or -Br;

$a'$ and $b'$ are independently 0-3;

c is 0 or 1;

provided $a' + b' + c'$ is not equal to 0;

$n'$ is 0-6;

$R_f$ and $R_f'$ are independently selected from -Br, -Cl, -F, perfluoroalkyl radicals having from 1 to 10 carbon atoms, and chloroperfluoroalkyl radicals having from 1 to 10 carbon atoms; and

$X'$ is selected from -F, -Cl, -Br, or mixtures thereof when $n' > 1$.

Forming a solution of a PFSI in its salt form may be accomplished by contacting the PFSI with one or more of a particular group of solvents. Solvents which are useful in the present invention include solvents having a boiling point above 120° C and a solubility parameter in the range of from 10 to 16. Preferably, the solvent is a polar aprotic solvent such as N,N'-dimethylformamide (DMF), dimethyl-sulfoxide (DMSO), N-methyl pyrrolidone, tetramethyl urea, triphenylphosphate, dimethylacetamide, sulfolane, butyrolactone, and the like. In addition, ethylene glycol may be used as the solvent, although it is not preferred because very high evaporating temperatures are required and they tend to decompose the polymer. It has been discovered that the use of water to enhance the dissolution of the PFSI is unnecessary for the redissolution of the PFSI using the solvent, although it may, optionally, be used.

The dissolution can be conducted at ambient temperature and pressure, although elevated temperatures and pressures may, optionally, be used. Stirring or agitation in an ultrasonic bath may be used to enhance the rate of dissolution. The particular temperature and the time used to dissolve the PFSI in the second solvent is not critical to the successful practice of the invention.

Typically, the PFSI solutions formed according to the procedure of the present invention have a weight/volume percent (w/v %) of from 0.01 to 8 percent by weight of PFSI. Preferably, the perfluorosulfonate ionomer in the solution has a concentration of from 0.5 to 3 w/v %. However, for the formation of films according to the present invention, the actual concentration of the PFSI in the solution is not critical. Although it might be necessary, when working with low-concentration solutions, to use more than one coating of the solution on the substrate to form a continuous film. However, if non-continuous films are acceptable, a one-coat layer of the solution might be sufficient.

Along with the solvents listed above, it is acceptable to use co-solvents. The solvent/co-solvent mixture must, however, be able to solvate the ionic portion of the PFSI, while plasticizing the non-ionic (fluorocarbon) portion of the PFSI, if a good film is to be formed. The co-solvent can contribute to either of these functions. Materials suitable for use as a co-solvent are one or more solvents selected from the group consisting of $C_1$ to $C_{12}$ alcohols, 2-methoxyethanol, 2-ethoxyethanol, ethylene glycol dimethyl ether, ethylene glycol diethyl ether, diethylene glycol dimethyl ether, diethylene glycol diethyl ether, dioxane, and acetonitrile.

After dissolving the PFSI in the solvent or the solvent/co-solvent mixture to form a solution, the solution is contacted with the substrate upon which it is desired to have a PFSI film deposited. The solution may be coated onto the substrate by dipping the substrate into the solution, by painting or spraying the solution onto the substrate, or by a variety of other processes well-known in the art.

The substrate itself can be any of a wide variety of materials, including a fabric (especially a fabric made at least in part of perhalocarbon fibers or glass fibers), an ion exchange membrane, or a porous diaphragm, in this latter case for the purpose of converting the porous diaphragm to a nonporous membrane-like article. The coated articles so made can be used in various liquid permeation processes, such as reverse osmosis, ultrafiltration, and electrolysis, especially electrolysis of aqueous sodium chloride solution.

The solution can also be used to coat catalyst supports, such as metals or ceramics. Such catalysts are useful in catalyzing alkylations, ether formations, and a host of other acid catalyzed chemical reactions. Other substrates are described in U. S. Patent No. 4,277,344, "Interfacially Synthesized Reverse Osmosis Membrane." There, a variety of organic polymeric materials are used as substrates, including polysulfone, chlorinated polyvinyl chloride, polyvinyl butyral, polystyrene, and cellulose esters. The substrate can be microporous so as to have millions of pores per square centimeter. Typical pore sizes range from 1 to 1000 millimicrons in their widest dimension.

After the solution has been coated onto the desired substrate, the solvent or solvent/co-solvent mixture is removed from the solution, thereby precipitating the PFSI onto the substrate. However, it has been discovered that solvent-resistant films are formed only when the solvent is removed from the solution by heating the solution to temperatures greater than 120° C.

It has further been discovered that the higher the solubility parameter of the solvent, the higher the processing temperature should be for removing the solvent. For example, when DMF is used as the solvent, it is optimal to heat the solution to a temperature range of from 120° C to 165° C for the removal of the DMF. Most preferably, the DMF is removed at a temperature of about 165° C. DMF has a solubility parameter of 12.1 Hildebrands (Hb). Likewise, when DMSO is used as the solvent, it is optimal to heat the solution to a temperature range of from 165° C to 185° C for removal of the DMSO. DMSO has a solubility parameter of 12.9 Hb. Similarly, when ethylene glycol is used as the solvent, it is optimal to heat the solution to a temperature range of from 180° C to 190° C. Ethylene glycol has a solubility parameter of 16.3 Hb.

It is a further feature of the invention that a portion of the solvent from the coating solution on the substrate can be removed at moderate temperatures with reduced pressures, provided such preliminary drying is followed by sufficient drying at elevated temperatures to produce a solvent resistant film.

Although the reasons for the formation of films having properties similar to the polymers as originally produced is not entirely understood, it is thought that it is related to the amount of crystallinity and to the formation of ionic clusters in the PFSI. Films which show poor physical and mechanical characteristics have been found to show distinctly different x-ray scattering spectra than both films prepared according to the present invention and PFSI films obtained from hydrolysis of the thermoplastic precursors.

## Example 1

This example shows the use of the invention on an PFSI using dimethylsulfoxide as the solvent.

A 0.5 gram sample of a sulfonic acid type PFSI in its proton form having an equivalent weight of about 1286 was contacted with about 89.3 grams of a 50:50 ethanol:water mixture at a temperature of about 250° C at a pressure of about 800 pounds per square inch (5512 kPa) to dissolve the PFSI, thereby forming a first solution. The PFSI solution was then filtered through a Whatman #1 paper filter to remove any undissolved polymer. This produced a solution having a 0.445 weight/volume percent.

The solution was then neutralized by adding about 8.1 grams of a 0.05 Molar NaOH solution to convert the PFSI into its sodium form. It was then heated to about 60° C and maintained at that temperature for a time sufficient for the solvent to substantially completely evaporate, thereby forming a brittle film. The PFSI film was then removed and ground at room temperature into a fine white powder.

The method of the present invention was then used to form the polymer into a film. A 50 milligram sample of the PFSI powder prepared above was added to 10 milliliters of DMSO and then agitated in an ultrasonic bath for about 30 minutes to promote dissolution of the polymer. The temperature of the PFSI solution rose to about 40° C during this procedure.

The DMSO was then substantially completely evaporated at a temperature of about 185° C leaving the PFSI behind in the form of a film in the evaporation container. The PFSI film was clear, pliant, mechanically stable and could be removed from the walls of the evaporation vial as a coherent membrane.

The solubility of the PFSI film was assessed quantitatively by immersion of the solution processed film in 10 milliliters of a 50:50 ethanol:water solution with agitation from an ultrasonic bath for 1 hour. (Ultrasonication caused the temperature of the ethanol:water solvent to rise to about 50° C.) The solvent was then filtered through a Whatman #1 filter and evaporated to dryness. The solid residue was weighed and the percent (w/v) of the solution processed PFSI which was soluble was calculated to be about 3.5%.

## Example 2

This example shows the invention used on Nafion PFSI and using dimethylsulfoxide as the solvent.

A 0.5 gram sample of a sulfonic acid Nafion perfluorosulfonate ionomer (proton form) having an equivalent weight of about 1100 was contacted with about 89.3 grams of a 50:50 ethanol:water mixture at a temperature of about 250°C at a pressure of about 800 pounds per square inch (5512 kPa) to dissolve the PFSI, thereby forming a solution. The PFSI solution was then filtered through a Whatman #1 paper filter to remove any undissolved polymer. This produced a 0.428 w/v % solution of the PFSI.

The solution was then neutralized by adding about 7.8 grams of a 0.05 Molar NaOH solution to convert the PFSI into its sodium form. This solution was heated to about 60°C allowing the solvent to substantially completely evaporate subsequently forming a brittle film. The PFSI was then removed and ground at room temperature into a fine white powder.

The present invention was then used to prepare the PFSI into a film. A 50 milligram sample of the PFSI powder was added to 10 milliliters of DMSO and then agitated in an ultrasonic bath for about 30 minutes to promote dissolution of the polymer. The temperature of the PFSI solution rose to about 40°C during this procedure.

The DMSO was substantially completely evaporated at a temperature of about 185°C leaving the PFSI behind in the evaporation container. The PFSI was in the form of a film which was clear, pliant, mechanically stable and could be removed from the walls of the evaporation vial as a coherent film. The solubility of the PFSI film was assessed quantitatively by immersion of the solution processed film in 10 milliliters of a 50:50 ethanol:water solution with agitation from an ultrasonic bath for 1 hour. (Ultrasonication caused the temperature of the ethanol:water solvent to rise to about 50°C.) The solution was then filtered through a Whatman #1 filter and evaporated to dryness. The solid residue was weighed and the solute was found to be about 1.4% soluble.

Example 3

This example shows the invention used on Nafion PFSI and using dimethylformamide as the solvent.

A 0.5 gram sample of a sulfonic acid Nafion perfluorosulfonate ionomer (proton form) having an equivalent weight of about 1100 was contacted with about 89.3 grams of a 50:50 ethanol:water mixture at a temperature of about 250°C at a pressure of about 800 pounds per square inch (5512 kPa) to dissolve the PFSI, thereby forming a first solution. The PFSI solution was then filtered through a Whatman #1 paper filter to remove any undissolved polymer. This produced a 0.428 w/v % solution of the PFSI.

The solution was then neutralized by adding about 7.8 grams of a 0.05 Molar NaOH solution to convert the PFSI into its sodium form. This solution was heated to about 60°C allowing the solvent to completely evaporate subsequently forming a brittle film. The PFSI was then removed and ground at room temperature into a fine white powder.

The film was then used according to the method of the present invention to form a film. A 50 milligram sample of the PFSI powder was added to 10 milliliters of DMF and then agitated in an ultrasonic bath for about 30 minutes to promote dissolution of the polymer. The temperature of the PFSI solution rose to about 40°C during this procedure.

The DMF was completely evaporated at a temperature of about 165°C leaving the PFSI behind in an evaporation container. The PFSI was in the form of a film which was clear, pliant, mechanically stable and could be removed from the walls of the evaporation vial as a coherent film. The solubility of the PFSI film was assessed quantitatively by immersion of the solution processed film in 10 milliliters of a 50:50 ethanol:water solution with agitation from an ultrasonic bath for 1 hour. (Ultrasonication caused the temperature of the ethanol:water solvent to rise to about 50°C.) The solvent was then filtered through a Whatman #1 filter and evaporated to dryness. The solid residue was weighed and the PFSI was found to be about 3.8% soluble.

Example 4

This example shows the invention used on Nafion PFSI and using ethylene glycol as the solvent.

A 0.5 gram sample of a sulfonic acid Nafion perfluorosulfonate ionomer (proton form) having an equivalent weight of about 1100 was contacted with about 89.3 grams of a 50:50 ethanol:water mixture at a temperature of about 250°C at a pressure of about 800 pounds per square inch (5512 kPa) to dissolve the PFSI, thereby forming a solution. The PFSI solution was then filtered through a Whatman #1 paper filter to remove any undissolved polymer. This produced a 0.428 w/v % solution of the PFSI.

The solution was then neutralized by adding about 7.8 grams of a 0.05 Molar NaOH solution to convert the PFSI into its sodium form. This solution was heated to about 60°C allowing the solvent to completely evaporate subsequently forming a brittle film. The PFSI was then removed and ground at room temperature into a fine white powder.

The PFSI was then used in the method of the present invention to form a film. A 50 milligram sample of the PFSI powder was added to 10 milliliters of ethylene glycol and then agitated in an ultrasonic bath for about 30 minutes to promote dissolution of the polymer. The temperature of the PFSI solution rose to about 40°C during this procedure.

The ethylene glycol was completely evaporated at a temperature of about 185°C leaving the PFSI behind. The PFSI was in the form of a film which was clear, pliant, mechanically stable and could be removed from the walls of the evaporation vial as a coherent film. The solubility of the PFSI film was assessed quantitatively by immersion of the solution processed film in 10 milliliters of a 50:50 ethanol:water solution with agitation from an ultrasonic bath for 1 hour. (Ultrasonication caused the temperature of the ethanol:water solvent to rise to about 50°C.) The solvent was then filtered through a Whatman #1 filter and evaporated to dryness. The solid residue was weighed and the PFSI was determined to be about 6.5% soluble.

## Claims

1. A method for forming a perfluorosulfonate ionomer film comprising:

(a) forming a solution of a perfluorosulfonate ionomer in its salt form,

(b) coating a substrate with the perfluorosulfonate ionomer solution, and

(c) heating the coated substrate to a temperature of at least about 120°C to deposit a solvent-resistant film of a perfluorosulfonate ionomer onto the substrate.

2. The method of Claim 1, wherein the perfluorosulfonate ionomer is a copolymer of a first repeating unit selected from a first group of monomers and a second repeating unit selected from a second group of monomers wherein the first group of monomers is represented by the general formula:

$$CF_2 = CZZ'$$

where:

Z and $Z'$ are independently selected from -H, -Cl, -F, or -CF$_3$; and the second group of monomers is represented by the general formula:

$$Y\text{-}(CF_2)_a\text{-}(CFR_f)_b\text{-}(CFR_f')_c\text{-}O\text{-}[CF(CF_2X)\text{-}CF_2\text{-}O]_n\text{-}CF=CF_2$$

where:

Y is selected from -SO$_2$OA where:

A is selected from -H$^+$, an alkali metal, or -R$_1$ R$_2$ R$_3$ R$_4$N$^+$; and where R$_1$,R$_2$R$_3$, and R$_4$ are independently selected from -H$^+$, a branched or linear alkyl radical having from 1 to 10 carbon atoms or an aryl radical;

a is 0-6;

b is 0-6;

c is 0 or 1;

provided a + b + c is not equal to 0;

X is selected from -Cl, -Br, -F, or mixtures thereof when n> 1;

n is 0 to 6: and

R$_f$ and R$_f'$ are independently selected from -F, -Cl, perfluoroalkyl radicals having from 1 to 10 carbon atoms and fluorochloroalkyl radicals having from 1 to 10 carbon atoms.

3. The method of Claim 2, including a third type of monomer represented by the general formula:

$$Y'\text{-}(CF_2)_a'\text{-}(CFR_f)_b'\text{-}(CFR_f')_c'\text{-}O\text{-}[CF[(CF_2X')\text{-}CF_2\text{-}O]_n'\text{-}CF=CF_2}$$ where:

$Y'$ is selected from -F, -Cl or -Br;

$a'$ and $b'$ are independently 0-3;

$c'$ is 0 or 1;

provided $a' + b' + c'$ is not equal to 0;

$n'$ is 0-6;

R$_f$ and R$_f'$ are independently selected from -Br, -Cl, -F, perfluoroalkyl radicals having from 1 to 10 carbon atoms, and chloroperfluoroalkyl radicals having from 1 to 10 carbon atoms; and

$X'$ is selected from -F, -Cl, -Br, or mixtures thereof when $n' > 1$.

4. The method of Claim 2, wherein n = 0 or 1; R$_f$ and R$_f'$ are -F; X is -Cl or -F; and a+b+c is equal to 2 or 3.

5. The method of Claim 1, wherein the solution includes a solvent selected from N,N'-dimethylformamide (DMF), dimethylsulfoxide (DMSO), N-methyl pyrrolidone, triphenylphosphate, tetramethyl urea, dimethyl-acetamide, sulfolane, butyrolactone and ethylene glycol.

6. The method of Claim 5, wherein the solvent includes water.

7. The method of Claim 1, wherein the perfluorosulfonate ionomer in the solution has a concentration of from 0.01 to 8 weight/volume percent.

8. The method of Claim 1, wherein the perfluorosulfonate ionomer in the solution has a concentration of from 0.5 to 3 weight/volume percent.

9. The method of Claim 5 or 6, wherein the solution includes a co-solvent selected from C$_1$ to C$_{12}$ alcohols, 2-methoxyethanol, 2-ethoxyethanol, ethylene glycol dimethyl ether, ethylene glycol diethyl ether, diethylene glycol dimethyl ether, diethylene glycol diethyl ether, dioxane, and acetonitrile.

10. The method of Claim 1, wherein the substrate is selected from wire mesh, ceramics, cloth fabrics, ion exchange membranes and porous diaphragms.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | US-A-4 731 263 (C.R. MARTIN et al.) <br> * Whole document * | 1-10 | C 08 J 5/22 |
| X | FR-A-2 024 289 (E.I. DU PONT DE NEMOURS) <br> * Claims; page 4, lines 30-33; page 2, lines 1-19 * | 1-10 | |
| D,X | EP-A-0 066 369 (E.I. DU PONT DE NEMOURS) <br> * Claims * | 1-10 | |
| X | US-A-4 650 551 (W.P. CARL et al.) <br> * Claims; column 2, lines 45-49; column 3 * | 1-4 | |
| A | US-A-4 298 697 (S.K. BACZEK et al.) | | |
| D,A | EP-A-0 041 732 (DOW) | | |
| D,A | EP-A-0 041 733 (DOW) | | TECHNICAL FIELDS SEARCHED (Int. Cl.4) <br><br> C 08 J |

The present search report has been drawn up for all claims

| Place of search | Date of completion of the search | Examiner |
|---|---|---|
| THE HAGUE | 30-09-1988 | VAN GOETHEM G.A.J.M. |